Europäisches Patentamt

European Patent Office

Office européen des brevets

(19)

(11) **EP 0 604 540 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(21) Anmeldenummer: **92920195.2**

(22) Anmeldetag: **21.09.1992**

(51) Int Cl.⁶: **H02J 9/06**

(86) Internationale Anmeldenummer:
**PCT/DE92/00821**

(87) Internationale Veröffentlichungsnummer:
**WO 93/06644 (01.04.1993 Gazette 1993/09)**

(54) **VERFAHREN ZUM GEWINNEN EINES SCHALTBEFEHLS EINER SCHNELLUMSCHALTEINRICHTUNG**

MEASURING PROCESS FOR OBTAINING A SWITCHING COMMAND IN A RAPID CHANGEOVER DEVICE

PROCEDE DE MESURE POUR OBTENIR UNE INSTRUCTION DE COMMUTATION D'UN COMMUTATEUR RAPIDE

(84) Benannte Vertragsstaaten:
**CH DE FR GB LI SE**

(30) Priorität: **20.09.1991 DE 4131815**

(43) Veröffentlichungstag der Anmeldung:
**06.07.1994 Patentblatt 1994/27**

(73) Patentinhaber:
**SIEMENS AKTIENGESELLSCHAFT**
**D-80333 München (DE)**

(72) Erfinder: **SCHUSTER, Norbert**
**D-8550 Forchheim-Kersbach (DE)**

(56) Entgegenhaltungen:
**DE-A- 2 108 307      DE-A- 3 742 028**
**US-A- 4 310 771      US-A- 4 311 919**

- **IEEE TRANSACTIONS ON POWER DELIVERY, Bd. 4, Nr. 3, Juli 1989, NEW YORK, US, Seiten 1602 - 1609; BENMOUYAL: 'An adaptive sampling-interval generator for digital relaying'**

## Beschreibung

Die Erfindung bezieht sich auf ein Verfahren zum Gewinnen eines Schaltbefehls einer Schnellumschalteinrichtung zur bedarfsweisen Umschaltung einer Verbraucheranlage von einer Energieversorgungsquelle auf eine weitere Energieversorgungsquelle, bei dem beim Abtrennen der Verbraucheranlage von der einen Energiequelle eine entstehende sprungartige Veränderung der Spannung an der Verbraucheranlage erfaßt wird, und nach dem Abtrennen der Verbraucheranlage von der einen Energiequelle eine Differenzspannung unter Heranziehen der Spannung der weiteren Energieversorgungsquelle und der Spannung an der Verbraucheranlage gebildet wird sowie der Schaltbefehl unter Berücksichtigung der Eigenzeit des die Umschaltung bewirkenden Leistungsschalters dann gegeben wird, wenn für den Zeitpunkt der Umschaltung eine Differenzspannung mit einem Wert unterhalb eines zulässigen Höchstwertes vorausberechnet wird.

Ein derartiges Verfahren ist der DE 21 08 307 C3 entnehmbar. Bei diesem bekannten Verfahren wird eine dem Mittelwert der Differenzspannung aus der Spannung der jeweils zuzuschaltenden Energieversorgungsquelle und der Spannung an der Verbraucheranlage proportionale Hilfsspannung gebildet; aus dieser Hilfsspannung werden durch mehrmalige Differentiation weitere Hilfsspannungen derart gebildet, daß sie Einzelglieder einer Reihenentwicklung, vorzugsweise einer Taylor-Reihe, darstellen. Dabei sind die Hilfsspannungen so erzeugt, daß sie dem Produkt aus dem Differentialquotienten der jeweiligen Ordnung und einer einen wählbaren Zeitfaktor darstellenden Größe mit entsprechender Potenz proportional sind. Die so gebildeten Hilfsspannungen werden addiert und mit einer vorgegebenen Spannung zur Gewinnung eines Schaltbefehls verglichen. Entspricht der wählbarer Zeitfaktor der Eigenzeit des die Umschaltung bewirkenden Schalters, dann läßt sich mit dem bekannten Verfahren ein Umschalten unter Berücksichtigung der Eigenzeit des jeweiligen Schalters zu einem Zeitpunkt erzeugen, zu dem die Summe der Hilfsspannungen einen vorgegebenen Wert unterschreitet, so daß die Umschaltung weitgehend stoßfrei erfolgt.

Schnellumschalteinrichtungen sichern die Energieversorgung von wichtigen Verbraucheranlagen, insbesondere Motoranordnungen. Notwendig sind sie in Eigenbedarf-Schaltanlagen von Kraftwerken, für die fast immer mindestens zwei voneinander möglichst unabhängige Energieversorgungsquellen vorgesehen werden. In solchen Eigenbedarfs-Schaltanlagen werden von einer Eigenbedarf-Sammelschiene eines Generatorblocks aus alle für den Betrieb benötigten Maschinen und Geräte gespeist. Während des Anfahrens des Generatorblocks muß die dazu benötigte Energie aus dem Netz bezogen werden. Nach Abschluß des Anfahrvorganges wird der Eigenbedarf aus dem Block selbst bezogen.

Bei einer Störung, beispielsweise Kurzschluß, Frequenz- oder Spannungsabsenkung durch Überlast usw., im speisenden Netz bzw. Generator muß innerhalb weniger Sekunden auf eine andere Energieversorgungsquelle umgeschaltet werden, um den Eigenbedarf des Kraftwerks weiterhin sicherzustellen. Bei einem solchen Umschaltvorgang wird zuerst der Schalter zur angeschlossenen Energieversorgungsquelle geöffnet, so daß die Verbraucheranlage ohne Einspeisung ist. Die Spannung an der Verbraucheranlage nimmt hinsichtlich Frequenz und Betrag mit einer Zeitkonstante ab, die anlagenspezifisch ist. Nach der Abtrennung der Verbraucheranlage von der einen Energieversorgungsquelle muß möglichst schnell auf die andere Energieversorgungsquelle umgeschaltet werden. Dies kann jedoch nur dann geschehen, wenn die Differenzspannung zwischen der zuzuschaltenden weiteren Energieversorgungsquelle und der Verbraucheranlage unterhalb eines einstellbaren Wertes liegt. Dabei ist die Eigenzeit des die Umschaltung jeweils bewirkenden Leistungsschalters zu berücksichtigen.

Der Erfindung liegt ausgehend von dem eingangs beschriebenen, bekannten Meßverfahren die Aufgabe zugrunde, ein Meßverfahren zum Gewinnen eines Schaltbefehls einer Schnellumschalteinrichtung vorzuschlagen, mit dem sich unter Berücksichtigung der Eigenzeit des jeweils die Umschaltung bewirkenden Leistungsschalters die Differenzspannung aus verhältnismäßig einfach ermittelbaren Einzelgrößen relativ genau berechnen läßt, so daß die Umschaltung weitestgehend stoßfrei erfolgen kann.

Zur Lösung dieser Aufgabe werden bei einem Meßverfahren der eingangs angegebenen Art erfindungsgemäß beim Abtrennen der Verbraucheranlage die Scheitelwerte, die Frequenzen und die Phasenlagen der Spannungen an der einen und der weiteren Energieversorgungsquelle ermittelt, nach dem Abtrennen der Verbraucheranlage werden die zeitliche Änderung der Frequenz und die zeitliche Änderung des Betrages der Spannung an der Verbraucheranlage ermittelt; anschließend wird zur Errechnung des Zeitpunktes der Umschaltung die durch den Ausdruck

$$U_{2max} \cdot \exp(j(\omega_2 \cdot t_s + \varphi_2)) - U_{1max}(1-c) \cdot (1-b \cdot t_s) \cdot \exp(j(\omega_1 \cdot t_s + \varphi_1 - \alpha \cdot t_s^2))$$

mit $\omega_1 = 2 \cdot \pi \cdot f_1$ und $\omega_2 = 2\pi \cdot f_2$
definierte Differenzspannung ausgewertet.

Das erfindungsgemäße Meßverfahren hat den wesentlichen Vorteil, daß mit ihm der Betrag der Differenzspannung unter voller Berücksichtigung der Beträge und der Phasenlagen sowie der Frequenzen der Spannung an der einen und der weiteren Energieversorgungsquelle und der Spannung an der Verbraucheranlage ermittelt wird, so daß infolge gleichzeitiger Berücksichtigung der Eigenzeit des die Umschaltung bewirkenden Leistungsschalters ein Schaltbefehl dann wirksam werden kann, wenn die Differenzspannung unterhalb eines vergleichsweise geringen vorgegebenen Wertes liegt; dadurch ergibt sich eine weitgehend stoßfreie Umschaltung.

Bei dem erfindungsgemäßen Meßverfahren kann die zeitliche Änderung der Frequenz der Spannung an der Verbraucheranlage in unterschiedlicher Weise ermittelt werden. Als besonders vorteilhaft hat es sich im Hinblick auf eine einfache Durchführbarkeit des Verfahrens und im Hinblick auf eine möglichst hohe Genauigkeit und Schnelligkeit erwiesen, wenn nach dem Abtrennen der Verbraucheranlage die Spannung an der Verbraucheranlage mit einer Abtastfrequenz abgetastet wird, die ein Vielfaches der Frequenz der Spannung an der Verbraucheranlage beträgt und wenn aus den Abtastwerten zu einem Abtastzeitpunkt in einem Fourier-Filter den Sinus-und Kosinusanteil der Grundschwingung der Spannung an der Verbraucheranlage entsprechende Meßsignale gewonnen werden, mit denen die Phasenlage der entsprechenden komplexen Meßgröße ermittelt wird; aus der Differenz der Phasenlage einer zu einem entsprechenden Abtastzeitpunkt in einer folgenden Halbwelle der Spannung an der Verbraucheranlage gewonnenen weiteren komplexen Meßgröße zu der Phasenlage der einen komplexen Meßgröße wird die jeweilige Frequenz der Spannung an der Verbraucheranlage nach der Beziehung

$$f_{3mess,i+1} = (\Delta\Phi . f_{3mess,i})/\pi$$

ermittelt, in der $\Delta\Phi$ die Differenz der Phasenlage und $f_{3mess,i}$ die im jeweils vorangegangenen Meßzyklus bestimmte Frequenz der Spannung an der Verbraucheranlage angibt. Das Verfahren zur Messung der Änderung der Frequenz einer Spannung kann auch für sich allein vorteilhaft angewendet werden.

Die Änderung des Betrages der Spannung an der Verbraucheranlage nach dem Abtrennen der Verbraucheranlage von der einen Energieversorgungsquelle kann in üblicher Weise durch Spannungsvergleich in äquidistanten Zeitabständen vorgenommen werden.

Zur Erläuterung der Erfindung ist in

Figur 1 eine Kraftwerkanlage mit einer Schnellumschalteinrichtung dargestellt, die nach dem erfindungsgemäßen Verfahren arbeitet, und in

Figur 2 ein Diagramm zur Erläuterung des Frequenzänderungs-Meßverfahrens gezeigt.

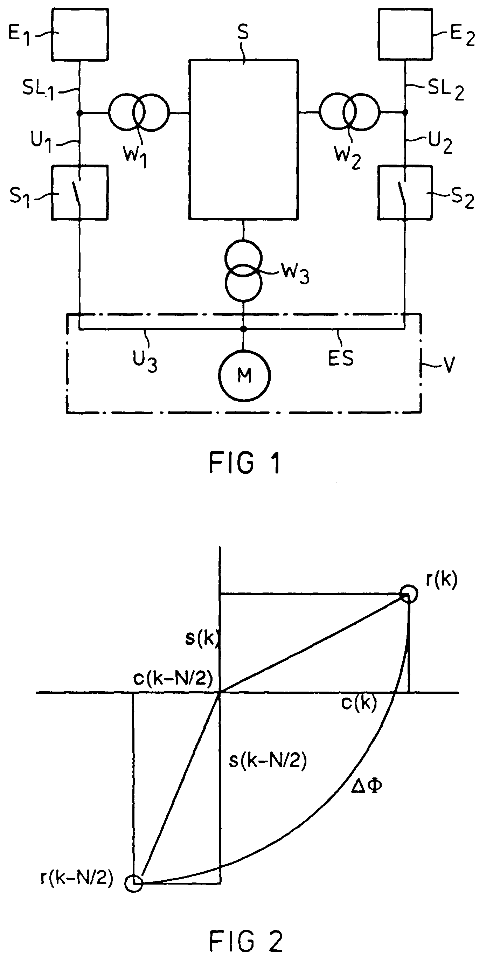

Wie Figur 1 erkennen läßt, ist eine Schnellumschalteinrichtung S über einen Spannungswandler $W_1$ mit einer Speiseleitung $SL_1$ (Spannung $U_1$) verbunden, über die aus einer Energieversorgungsquelle $E_1$ über einen Leistungsschalter $S_1$ eine Verbraucheranlage V gespeist wird, die eine Eigenbedarfsschiene ES und beispielsweise einen Motor M enthält. Die Verbraucheranlage V ist über einen weiteren Leistungsschalter $S_2$ und eine weitere Stromversorgungsleitung $SL_2$ mit einer weiteren Energieversorgungsquelle $E_2$ verbunden, die in der Figur ebenfalls nur schematisch dargestellt ist. Über einen weiteren Spannungswandler $W_2$ ist eine der Spannung $U_2$ an der weiteren Stromversorgungsleitung $SL_2$ entsprechende Spannung von der Schnellumschalteinrichtung S erfaßbar. Schließlich ist über einen zusätzlichen Spannungswandler $W_3$ auch die Spannung $U_3$ an der Verbraucheranlage V von der Schnellumschalteinrichtung S erfaßbar.

Bei der weiteren Erläuterung des erfindungsgemäßen Verfahrens wird davon ausgegangen, daß eine Umschaltung von der einen Energieversorgungsquelle $E_1$ auf die weitere Energieversorgungsquelle $E_2$ vorgenommen werden soll, weil die Energieversorgungsquelle $E_1$ gestört ist.

In dem angenommenen Fall ist vor der Betätigung des Leistungsschalters $S_1$ die Spannung $U_3$ an der Verbraucheranlage V bzw. der Eigenbedarfschiene ES gleich der Spannung $U_1$ an der Stromversorgungsleitung $SL_1$. Es gilt demzufolge in Momentanwertdarstellung

$$u_3 = u_1 = u_{1max} . \sin(\omega_1 . t + \varphi_1) \tag{1}$$

bzw. in Polardarstellung

$$\underline{U}_3 = \underline{U}_1 = \underline{U}_{1max} . \exp(j(\omega_1 . t + \varphi_1)), \tag{2}$$

worin

$u_{1max}$      den Scheitelwert,
$\omega_1$      die Kreisfrequenz ($2.\pi.f_1$) und
$\varphi_1$      den Phasenwinkel der Spannung $U_1$ bezeichnen.

Entsprechend läßt sich die Spannung der zuzuschaltenden weiteren Energieversorgungsquelle $E_2$ durch folgende Beziehungen ausdrücken

$$u_2 = u_{2max} . \sin(\omega_2 t + \varphi_2) \tag{3}$$

bzw.

$$\underline{U}_2 = \underline{U}_{2max}.\exp(j(\omega_2 t + \varphi_2)), \tag{4}$$

worin

$u_{2max}$     den Scheitelwert,
$\omega_2$     die Kreisfrequenz $(2.\pi f_2)$ und
$\varphi_2$     den Phasenwinkel der Spannung $U_2$ angeben.

Im Augenblick der Abtrennung der Verbraucheranlage V von der einen Energieversorgungsquelle $E_1$ durch Öffnen des Leistungsschalters $S_1$ erfährt die Spannung $U_3$ an der Verbraucheranlage V eine sprunghafte Änderung dem Betrage nach, die sich durch folgende Gleichung (5) ausdrücken läßt

$$U_3 = c.U_1. \tag{5}$$

Nach dem Abtrennen der Verbraucheranlage V von der einen Energieversorgungsquelle $E_1$ wird der Motor M in seiner Umdrehungsgeschwindigkeit durch Reibungsverluste abgebremst. Das bremsende Moment kann als mittleres Moment aller angeschlossenen Antriebe angesehen werden und führt zu einer zeitlichen Änderung der Frequenz im Sinne einer Frequenzverminderung. Dies ist auch bereits in der obenerwähnten DE 21 08 307 C3 in Spalte 3, Absatz 2 beschrieben. Die zeitliche Änderung erfolgt linear mit der Zeit, so daß sich die Kreisfrequenz $\omega_3$ der Spannung $U_3$ an der Verbraucheranlage V durch folgende Beziehung (6) beschreiben läßt:

$$\omega_3 = \omega_1 - \alpha.t \tag{6}$$

In dieser Gleichung

$\alpha$     bedeutet die zeitliche Änderung der Frequenz der Spannung $U_3$ an der Verbraucheranlage V und
$t$     die nach Öffnen des Leistungsschalters $S_1$ verstrichene Zeit.

Auch der Betrag der Spannung $U_3$ nimmt nach der erfolgten sprunghaften Änderung linear ab, was durch den Faktor $l-b.t$ beschreibbar ist, in der b den Abnahmefaktor der Spannung $U_3$ angibt. Der Verlauf der Spannung $U_3$ an der Verbraucheranlage V läßt sich somit in Momentanwert- bzw. Polardarstellung durch folgende Beziehungen angeben:

$$u_3 = u_{1max}.(1-C).(1 - b\,t).\sin(\omega_1.t + \varphi_1 - \alpha.t^2) \tag{7}$$

$$\underline{U}_3 = \underline{U}_{1max}.(1-c).(1 - b\,t).\exp(j(\omega_1.t + \varphi_1 - \alpha.t^2)) \tag{8}$$

Wie oben bereits ausgeführt worden ist, muß zum Zeitpunkt des Zuschaltens bzw. Schließens des weiteren Leistungsschalters $S_2$ die aus der Spannung $U_2$ der weiteren Energieversorgungsquelle und der Spannung $U_3$ an der Verbraucheranlage gebildete Differenzspannung $\Delta U$ kleiner als ein vorbestimmter Wert$\Delta U_{zulässig}$ sein. Dies läßt sich durch folgende Beziehung (9) ausdrücken:

$$\Delta U = |U_2 - U_3| \leq \Delta U_{zulässig}, \tag{9}$$

woraus folgt:

$$\Delta U= |U_{2max}.\exp(j(\omega_2.t_s + \varphi_2))-(1-c).(l-bt_s)U_{1max}.\exp(j(\omega_1.t_s + \varphi_1 - \alpha.t_s^2))| \leq \Delta U_{zulässig} \tag{10}$$

Dies zeigt, daß sich das erfindungsgemäße Meßverfahren zur Gewinnung eines Schaltbefehls dann ausführen läßt, wenn alle Größen der oben angegebenen Beziehung (10) ermittelt sind.

Hinsichtlich der Größen $U_{2max}$ bzw. $U_{1max}$ ergeben sich überhaupt keine Schwierigkeiten, weil diese Größen vor dem Umschaltvorgang einmal gemessen und festgehalten werden können. Die sprunghafte Veränderung c der Spannung $U_3$ kann beim Abtrennen ebenfalls gemessen und gespeichert werden.

Die zeitliche Änderung b der Spannung $U_3$ nach dem Abtrennen der Verbraucheranlage V von der einen Energieversorgungsquelle $E_2$ wird durch Spannungsvergleiche in gleichen zeitlichen Abständen ohne Schwierigkeiten ermittelt und ebenfalls als eine feste Größe gespeichert. Auch die Ermittlung der Kreisfrequenzen $\omega_2$ und $\omega_1$ vor dem Beginn des Umschaltvorganges bereitet keinerlei Schwierigkeiten; auch diese Meßgrößen werden festgehalten. Die Größe $t_s$ beschreibt die Eigenzeit der verwendeten Leistungsschalter $SL_1$ bzw. $SL_2$ und ist eine vorgegebene Größe.

Auch die Feststellung der Phasenwinkel $\varphi_2$ und $\varphi_1$ der Spannungen $U_2$ und $U_1$ unmittelbar vor dem Umschaltvorgang bereitet keinerlei Schwierigkeiten; auch diese Phasenwinkel werden gespeichert.

Zum Gewinnen eines Schaltbefehls ist damit im Hinblick auf die obenangegebene Gleichung nur die Größe $\alpha$ zu bestimmen, die die zeitliche Änderung der Frequenz der Spannung $U_3$ nach dem Abtrennen der Verbraucheranlagen V von der einen Energieversorgungsquelle $E_1$ beschreibt. Hierzu wird in folgender Weise vorgegangen:

Die Spannung $U_3$ wird mit einer Abtastfrequenz $f_A$ abgetastet, die ein Vielfaches der Frequenz $f_3$ der Spannung $U_3$ ist. Es ergeben sich dann N Abtastzeitpunkte je Periode der Spannung $U_3$. Die zu messende Frequenz ergibt sich dann zu

$$f_{mess}=N.f_A.\qquad(11)$$

Aus den abgetasteten Werten der Spannung $U_3$ läßt sich in der komplexen Ebene ein rotierender Zeiger bilden, indem die einzeln abgetasteten Werte einem Fourier-Filter zugeführt werden; in diesem Fourier-Filter wird der Sinus- und Kosinusanteil der Grundschwingung gewonnen. Vorteilhaft ist dieses Verfahren insofern, als es unempfindlich gegenüber Oberschwingungen ist und den Gleichanteil, z. B. den Abtast-Offset, eliminiert. Nimmt man beispielsweise 12 Abtastungen $a(k)$ je Periode der Spannung $U_3$ vor, arbeitet also mit einer Abtastfrequenz $f_A = 600$ Hz, dann ergibt sich folgende Filtervorschrift, indem Abtastwerte einer Periode der Netzfrequenz $U_3$ mit Berichtigungsfaktoren aufsummiert werden. Für den Sinusanteil $s(k)$ ergibt sich am Ausgang des Sinusfilters folgende Summation

$$s(k)=0,5.a(k-1)+7/8.a(k-2)+a(k-3)+7/8.a(k-4)+0,5.a(k-5)\ -0,5.a(k-7)-7/8.a(k-8)-a(k-9)-7/8.a(k-10)-0,5.a(k-11)\qquad(12)$$

Für den Kosinusanteil $c(k)$ ergibt sich folgende Summation bzw. Differenzbildung

$$c(k)=a(k)+7/8.a(k-1)+0,5.a(k-2)-0,5.a(k-4)-7/8.a(k-5)\ -a(k-6)-7/8.a(k-7)-0,5.a(k-8)+0,5.a(k-10)+7/8.a(k-11)\qquad(13)$$

In diesen Beziehungen geben $a(k-n)$ jeweils den Abtastwert wieder, der zeitlich um einen Wert n vor dem aktuellen Abtastwert $a(k)$ liegt. Die Ausgangssignale des Sinus- und Kosinusfilters sind um 90° phasenverschoben. In der komplexen Ebene (vgl. Figur 2) ergibt sich ein Zeiger $r(k)$, dessen Koordinaten durch $c(k)$ und $s(k)$ beschrieben sind. Dieser Zeiger $r(k)$ legt in der Zeit $\Delta t$ eine Winkeldifferenz von $\Delta\Phi$ zurück. Daraus läßt sich die Frequenz $f_{mess,i+1}$ des abgetasteten Signals leicht berechnen:

$$f_{mess,i+1}= \Delta\Phi/(2.\pi.\Delta t).\qquad(14)$$

Um mit dieser Gleichung die jeweilige Frequenz errechnen zu können, ist die Bestimmung von $\Delta t$ erforderlich. Diese Größe läßt sich durch die Abtastfrequenz $f_A$ und die Zahl der Abtastwerte N je Periode der Spannung $U_3$ ausdrücken. Die Winkeldifferenz wird aus der Lage zweier Zeigerpositionen entwickelt, die in aufeinanderfolgenden Halbwellen der Spannung $U_3$ hinsichtlich der Abtastzeitpunkte gleichliegen. Bevorzugt wird bei einer Netzfrequenz von 50 Hz die Lage zweier Zeigerpositionen ausgenutzt, die 10 ms auseinanderliegen. Diese Zeit entspricht bei einer Abtastfrequenz von $f_A = 600$ Hz N = 6 Abtastwerten oder einem Drehwinkel $\Delta\Phi = 180°$. Die Abtastfrequenz $f_a = 600$ Hz führt zu einer vollen Umdrehung des Zeigers in 20 ms, wenn die Signalfrequenz $f_{mess,i}$ der Netzfrequenz von 50 Hz entspricht. Damit läßt sich $\Delta t$ durch folgende Beziehung (15) beschreiben:

$$\Delta t = 1/f_A.N/2 = 1/(2.f_{mess,i})\qquad(15)$$

In dieser Gleichung (15) ist - wie oben bereits erwähnt - zu Beginn der Frequenzänderungsmessung mit $f_{mess,i} = 50$ Hz als Ausgangspunkt gerechnet.

Aus den Gleichungen (14) und (15) läßt sich dann die jeweilige Frequenz der Spannung $U_3$ an der Verbraucheranlage V durch die Beziehung (16) ausdrücken:

$$f_{mess,i+1} = (\Delta\Phi.f_{mess,i}) /\pi\qquad(16)$$

Auf diese Weise lassen sich nacheinander in gleichen Zeitabständen jeweils Messungen der aktuellen Frequenz der Spannung $U_3$ durchführen, woraus dann in einfacher Weise die zeitliche Änderung der Frequenz $\alpha$ errechnet werden kann.

$$\alpha = (f_{mess,i} - f_{mess,i+1})/\Delta t\qquad(17)$$

Damit sind dann alle Größen in der oben angegebenen Gleichung (1 0) ermittelt, und es kann auf rechnerischem Wege die jeweilige Differenzspannung $\Delta U$ ermittelt werden. Unterschreitet sie einen vorgegebenen zulässigen größten Wert $\Delta U_{zulässig}$, dann wird ein Schaltbefehl an den Leistungsschalter $S_2$ gegeben, der daraufhin zu einem Zeitpunkt die Verbraucheranlage V an die weitere Energieversorgungsquelle anschließt, indem die Differenzspannung $\Delta U$ kleiner als der zulässige Wert ist.

Hinsichtlich der Bestimmung der Größe $\alpha$ bzw. hinsichtlich der Messung der Änderung der Frequenz der Spannung $U_3$ ist ergänzend darauf hinzuweisen, daß bei einer größeren Abweichung der Frequenz dieser Spannung von der Netzfrequenz die Abtastfrequenz sinnvollerweise nachgeführt wird, um die Genauigkeit des Verfahrens beizubehalten. Dies wird dadurch realisiert, daß die Abtastfrequenz verändert wird, indem in den Zähler, der den Abtasttakt erzeugt, jeweils ein neuer Zahlenwert abgespeichert wird. Dieser Zahlenwert kann in einer Tabelle hinterlegt werden.

**Patentansprüche**

1. Meßverfahren zum Gewinnen eines Schaltbefehls einer Schnellumschalteinrichtung (S) zur bedarfsweisen Umschaltung einer Verbraucheranlage (V) von einer Energieversorgungsquelle ($E_1$) auf eine weitere Energieversorgungsquelle ($E_2$), bei dem

a) beim Abtrennen der Verbraucheranlage (V) von der einen Energiequelle ($E_1$) eine entstehende sprungartige Veränderung $c.U_{3max}$ der Spannung $U_3$ an der Verbraucheranlage (V) erfaßt wird, und

b) nach dem Abtrennen der Verbraucheranlage (V) von der einen Energiequelle ($E_1$) eine Differenzspannung $\Delta U$ unter Heranziehen der Spannung $U_2$ der weiteren Energieversorgungsquelle ($E_2$) und der Spannung $U_3$ an der Verbraucheranlage (V) gebildet wird sowie

c) der Schaltbefehl unter Berücksichtigung der Eigenzeit $t_s$ des die Umschaltung bewirkenden Leistungsschalters ($L_2$) dann gegeben wird, wenn für den Zeitpunkt der Umschaltung eine Differenzspannung $\Delta U$ mit einem Wert unterhalb eines zulässigen Höchstwertes vorausberechnet wird,

**dadurch gekennzeichnet**, daß

d) beim Abtrennen der Verbraucheranlage die Scheitelwerte $U_{1max}$, $U_{2max}$, die Frequenzen $f_1$, $f_2$ und die Phasenlagen $\varphi_1$, $\varphi_2$ der Spannungen $U_1$, $U_2$ an der einen und der weiteren Energieversorgungsquelle ($E_1,E_2$) ermittelt werden,

e) nach dem Abtrennen der Verbraucheranlage (V) die zeitliche Änderung $\alpha$ der Frequenz $f_3$ und die zeitliche Änderung b des Betrages der Spannung $U_3$ an der Verbraucheranlage (V) ermittelt werden und

f) anschließend zur Errechnung des Zeitpunktes der Umschaltung die durch den Ausdruck

$$U_{2max}.\ \exp(j(\omega_2.t_s + \varphi_2))\text{-}U_{1max}(1\text{-}c).(1\text{-}b.t_s).\exp(j(\omega_1 t_s + \varphi_1\text{-}\alpha t_s^2))$$

mit $\omega_1 = 2.\pi\ f_1$ und $\omega_2 = 2\pi.f_2$
definierte Differenzspannung ($\Delta U$) ausgewertet wird.

2. Meßverfahren nach Anspruch 1,
**dadurch gekennzeichnet**, daß

g) nach dem Abtrennen der Verbraucheranlage (V) die Spannung $U_3$ an der Verbraucheranlage (V) mit einer Abtastfrequenz ($f_A$) abgetastet wird, die ein Vielfaches der Frequenz $f_3$ der Spannung $U_3$ an der Verbraucheranlage (V) beträgt,

h) aus den Abtastwerten zu einem Abtastzeitpunkt in einem Fourier-Filter dem Sinus- und Cosinusanteil der Grundschwingung der Spannung $U_3$ an der Verbraucheranlage entsprechende Meßsignale gewonnen werden, mit denen die Phasenlage der entsprechenden komplexen Meßgröße ermittelt wird, und

i) aus der Differenz $\Delta\Phi$ der Phasenlage einer zu einem entsprechenden Abtastzeitpunkt in einer folgenden Halbwelle der Spannung $U_3$ an der Verbraucheranlage (V) weiteren komplexen Meßgröße zu der Phasenlage der einen komplexen Meßgröße die jeweilige Frequenz $f_{3max, i+1}$ der Spannung $U_3$ an der Verbraucheranlage (V) nach der Beziehung

$$f_{3mess, i+1} = (\Delta\Phi\ .f_{3mess, i})\ /\pi$$

ermittelt wird, in der $f_{3mess,i}$ die im jeweils vorangegangenen Meßzyklus bestimmte Frequenz der Spannung $U_3$ an der Verbraucheranlage (V) angibt.

**Claims**

1. Measuring process for obtaining a switching command in a rapid changeover device (S) for the changeover, as necessary, of a consumer's installation (V) from one power supply source ($E_1$) to an additional power supply source ($E_2$), where

a) upon the disconnection of the consumer's installation (V) from the one power source ($E_1$) a resulting sudden change $c.U_{3max}$ of the voltage $U_3$ at the consumer's installation (V) is detected, and

b) after the disconnection of the consumer's installation (V) from the one power source ($E_1$) an error voltage

ΔU is formed with the use of the voltage $U_2$ of the additional power supply source ($E_2$) and the voltage $U_3$ at the consumer's installation (V) and

c) the switching command with consideration of the inherent delay $t_S$ of the circuit breaker ($L_2$) effecting the changeover is given if for the instant of the changeover an error voltage ΔU with a value below an allowable highest value is calculated,

characterized in that

d) upon the disconnection of the consumer's installation the peak values $U_{1max}$, $U_{2max}$, the frequencies $f_1$, $f_2$ and the phase angles $\varphi_1$, $\varphi_2$ of the voltages $U_1$, $U_2$ at the one and the additional power supply source ($E_1$, $E_2$) are determined,

e) after the disconnection of the consumer's installation (V) the temporal change $\alpha$ of the frequency $f_3$ and the temporal change b of the magnitude of the voltage $U_3$ at the consumer's installation (V) are determined and

f) subsequently, to calculate the instant of the changeover the error voltage (ΔU) defined by the expression

$$U_{2max}. \exp(j(\omega_2.t_s + \varphi_2)) - U_{1max}(1-c).(1-b.t_s).\exp(j(\omega_1 t_s + \varphi_1 - \alpha t_s^2)),$$

whereby $\omega_1 = 2.\pi f_1$ and $\omega_2 = 2\pi.f_2$, is evaluated.

2. Measuring process according to claim 1,
characterized in that

g) after the disconnection of the consumer's installation (V) the voltage $U_3$ at the consumer's installation (V) is scanned with a scanning frequency ($f_A$), which amounts to a multiple of the frequency $f_3$ of the voltage $U_3$ at the consumer's installation (V),

h) from the scanning values at a scanning instant in a Fourier filter measuring signals corresponding to the sine and cosine part of the fundamental oscillation of the voltage $U_3$ at the consumer's installation are obtained, with which the phase angle of the corresponding complex measured variable is determined, and

i) from the difference $\Delta\Phi$ of the phase angle of an additional complex measured variable at a corresponding scanning instant in a subsequent half wave of the voltage $U_3$ at the consumer's installation (V) to the phase angle of the one complex measured variable, the respective frequency $f_{3max, i+1}$ of the voltage $U_3$ at the consumer's installation (V) is determined according to the equation

$$f_{3mess' i+1} = (\Delta\Phi .f_{3mess' i})/\pi,$$

in which $f_{3mess,i}$ indicates the frequency of the voltage $U_3$ at the consumer's installation (V), determined in the respectively preceding measuring cycle.

**Revendications**

1. Procédé de mesure destiné à l'obtention d'une instruction de commutation d'un dispositif commutateur rapide (S) pour la commutation si nécessaire d'une installation consommatrice d'énergie (V) d'une source d'alimentation en énergie ($E_1$) à une autre source d'alimentation en énergie ($E_2$), dans lequel

a) lors de la déconnexion de l'installation consommatrice (V) d'une source d'énergie ($E_1$), on détecte l'apparition d'une brusque variation c.$U_{3max}$ de la tension $U_3$ sur l'installation consommatrice (V),

b) après la déconnexion de l'installation consommatrice (V) d'une source d'énergie ($E_1$), on génère une tension de différence ΔU en recourant à la tension $U_2$ de l'autre source d'alimentation en énergie ($E_2$) et à la tension $U_3$ sur l'installation consommatrice (V) et

c) on donne l'instruction de commutation en tenant compte du temps propre $t_s$ de l'interrupteur de puissance ($L_2$) provoquant la commutation si l'on calcule à l'avance pour l'instant de la commutation une tension de différence ΔU inférieure à une valeur maximum admissible,

caractérisé en ce que,

d) lors de la déconnexion de l'installation consommatrice, on détermine les valeurs de crête $U_{1max}$, $U_{2max}$, les fréquences $f_1$, $f_2$ et les positions de phase $\varphi_1$, $\varphi_2$ des tensions $U_1$, $U_2$ sur une source d'alimentation en énergie et sur l'autre source ($E_1$, $E_2$),

e) après la déconnexion de l'installation consommatrice (V), on détermine la variation dans le temps $\alpha$ de la fréquence $f_3$ et la variation dans le temps b du module de la tension $U_3$ sur l'installation consommatrice (V) et

f) ensuite, pour calculer l'instant de la commutation, on exploite la tension de différence ($\Delta U$) définie par l'expression

$$U_{2max}.\exp(j(\omega_2.t_s + \varphi_2))-U_{1max}(1-c).(1-b.t_s).\exp(j(\omega_1 t_s+\varphi_1-\alpha t_s^2))$$

avec $\omega_1=2.\pi f_1$ et $\omega_2=2\pi.f_2$

2. Procédé de mesure selon la revendication 1, caractérisé en ce que,

g) après la déconnexion de l'installatin consommatrice (V), on échantillonne la tension $U_3$ sur l'installation consommatrice (V) à une fréquence d'échantillonnage ($f_A$) qui est égale à un multiple de la fréquence $f_3$ de la tension $U_3$ sur l'installation consommatrice (V),

h) on obtient, à partir des valeurs d'échantillonnage, à un instant d'échantillonnage, dans un filtre de Fourier, des signaux de mesure correspondant à la partie sinusoïdale et à la partie cosinusoïdale de l'oscillation fondamentale de la tension $U_3$ sur l'installation consommatrice, par lesquels on calcule la position de phase de la grandeur de mesure complexe correspondante, et

i) à partir de la différence $\Delta\Phi$ entre la position de phase d'une autre grandeur de mesure complexe à un instant d'échantillonnage correspondant, dans une alternance suivante, de la tension $U_3$ sur l'installation consommatrice (V) et la position de phase d'une grandeur de mesure complexe, on calcule la fréquence $f_{3max, i+1}$ de la tension $U_3$ sur l'installation consommatrice selon la relation

$$f_{3mess, i+1}=(\Delta\Phi .f_{3mess, i})/\pi,$$

dans laquelle $f_{3mess,i}$ indique la fréquence calculée dans le cycle de mesure, respectivement antérieur, de la tension $U_3$ sur l'installation consommatrice (V).

FIG 1

FIG 2